# EUROPÄISCHE PATENTSCHRIFT

(11) **EP 1 845 265 B1**
(45) Veröffentlichungstag und Bekanntmachung des Hinweises auf die Patenterteilung: **24.12.2008**
(21) Anmeldenummer: 06007533.0
(22) Anmeldetag: 10.04.2006
(51) Int. Cl.: F04C 18/16, F01C 21/02

(54) **Drehkolbenmaschine und Festlageranordnung hierfür**
Rotary piston machine and bearing arrangement therefor
Machine à piston rotatif et arrangement des roulements en cette machine

(43) Veröffentlichungstag der Anmeldung: 17.10.2007
(73) Patentinhaber: Aerzener Maschinenfabrik GmbH, 31855 Aerzen (DE)
(72) Erfinder: Irtel, Björn, 31785 Hameln (DE); Palm, Oliver, 31867 Lauenau (DE)
(74) Vertreter: HOFFMANN EITLE

(56) Entgegenhaltungen:
- DE-C- 669 674
- JP-A- 4 203 382
- JP-A- 11 107 970
- JP-A- 62 107 285
- JP-A- 2002 339 960

## Beschreibung

### Technisches Gebiet

Die Erfindung betrifft eine trockenlaufende Drehkolbenmaschine, welche mindestens zwei in einem Gehäuse über Wellen und Wälzlageranordnungen gelagerte Drehkolben, die miteinander gegenläufig kämmen, um einen Förderraum zu definieren, aufweist, wobei die Wellen über schrägverzahnte Steuerräder betrieblich miteinander gekoppelt sind, und eine der Wälzlageranordnungen mindestens einer Welle in axialer Richtung als Festlageranordnung ausgebildet ist. Unter trockenlaufend ist dabei zu verstehen, dass die Drehkolben selbst nicht durch Schmiermittel wie Schmieröl oder dergleichen geschmiert werden.

### Stand der Technik

Drehkolbenmaschinen, insbesondere Schraubenverdichter und Drehkolbengebläse der Bauart Roots, aber auch Drehkolbenexpansionsmaschinen, werden heute bis zu Differenzdrücken von etwa 7 bar und bis zu Drehzahlen von etwa 20.000 1/min vornehmlich wälzgelagert. Die durch den Verdichtungs- bzw. Entspannungsprozess auftretenden hohen radialen Kräfte werden zumeist durch Zylinderrollenlager aufgenommen. Bei verwundenen Rotoren (z.B. bei Schraubenverdichtern) bildet sich auch in axialer Richtung ein Druckgradient aus, wodurch zudem axiale Kräfte in den Lagern auftreten.

Besonders bei Drehkolbenmaschinen mit geringer innerer Verdichtung bzw. geringer innerer Entspannung (also mit geringem inneren Volumenverhältnis) können in instationären Betriebszuständen (z.B. Maschinenstart) andere Axialkräfte (z.B. solche, die aus schrägverzahnten Zahnrädern von Synchronisiergetrieben herrühren) größer sein als die aus den Gaskräften resultierenden Axialkräfte. Es resultiert daraus insgesamt eine negative Axialkraft, die ebenfalls von der Festlagerung aufgenommen werden muss. Auf diese negative Axialkraft wird beispielsweise in DE 3713221 A1 hingewiesen, die einen bekannten Schraubenverdichter offenbart.

Gleichzeitig ist es notwendig, das axiale Spiel der druckseitigen Rotorstirnseite zum Gehäuse und das axiale Spiel der beiden Rotoren zueinander möglichst gering zu halten, um Spaltverluste zu minimieren. Nur durch geringe Spiele können hohe Wirkungsgrade erreicht werden. Andererseits müssen bei allen Betriebszuständen Berührungen ausgeschlossen sein. Um den Einfluss thermischer Dehnungen auf das druckseitige Rotorstirnspiel gering zu halten, wird zumeist die heißere Druckseite als Festlagerseite gewählt. Die Größe des Axialspaltes zwischen der saugseitigen Stirnfläche des Rotors und der zugeordneten Gehäusefläche ist von geringerer Bedeutung. Druckseitig wird häufig eine kombinierte Radial-Axial-Lagerung verwendet, wobei z. B. ein einfaches Zylinderrollenlager als Radiallager verwendet wird und die Axialkräfte z.B. durch Schrägkugellager in Tandembauweise aufgenommen werden. Eine solche Lagerung ist beispielsweise in Beitz, W.; Grote, K.-H.: Dubbel - Taschenbuch für den Maschinenbau. 19. Auflage Springer-Verlag 1997, Seite P44 beschrieben und in Bild 49 auf Seite P46 dargestellt.

Einen ausführlichen Überblick des Standes der Technik der unterschiedlichen Lagerungsvarianten von Schraubenverdichtern bietet ferner die SKF-USA Firmenschrift Nr. 100-956 "Bearings in twin screw compressors - Application Handbook" 1998.

In der heutigen Praxis erfolgt beispielsweise bei Schraubenverdichtern die Einstellung der Axialspalte zwischen den Rotoren und dem Gehäuse, indem die Rotoren zunächst montiert werden und der sich so ergebene Axialspalt gemessen wird. Danach wird der Schraubenverdichter teilweise demontiert und es werden geeignete Distanzscheiben zwischen das Axiallager und seine axiale Anlagefläche am Gehäuse positioniert. Erst dann wird der Verdichter endgültig montiert. Bei vielen Ausführungen von Drehkolbenmaschinen ist es jedoch schwierig, den Axialspalt zu messen. In allen Fällen handelt es sich um ein zeitaufwendiges Verfahren.

In DE 2531414 A1 wird eine Rotoraxialspalteinstellung vorgeschlagen, welche diese Nachteile umgeht, indem das Axiallager in eine Muffe mit Außengewinde eingesetzt wird. Hierdurch ist eine Spalteinstellung ohne Demontage und auch eine Nachstellung möglich, der Vorschlag ist jedoch konstruktiv sehr aufwändig und somit teuer, da Feingewinde mit großen Durchmessern hergestellt werden müssen. Zudem kann das Spiel der Lagerkombination selbst nicht beeinflusst werden.

Bedingt durch die Forderung nach immer höheren Fördervolumenströmen bei gleichbleibender Baugröße und gleichzeitig zunehmender Verwendung von drehzahlvariablen Antrieben zusammen mit steigendem Kostendruck und dem Wunsch nach geringeren spezifischen Energiekosten werden heute unter Anderem folgende Anforderungen an die Lagerung von Drehkolbenmaschinen mit mit schrägverzahnten Steuerrädern gestellt:
1. Aufnahme der aus der Gasverdichtung herrührenden radialen und axialen Kräfte.
2. Aufnahme von Axialkräften, die den axialen Gaskräften entgegengerichtet sind ("Negativrichtung").
3. Präzise Fixierung der Rotorpositionen zueinander und innerhalb der begrenzenden Gehäusewandung mit einem möglichst geringen Lagerspiel.
4. Kurzer Einbauraum in axialer Richtung, um die Längen der Rotorwellen und damit Durchbiegungen möglichst klein zu halten.
5. Eignung für niedrige bis hohe Drehzahlen: Lagergeschwindigkeiten von bis zu 1,0x10⁶ n*dm bei schwankenden Druckdifferenzen (mit: n = Drehzahl [U/min] und dm = mittlerer Durchmesser des Lagers [mm]).
6. Leichter Lauf und damit geringe Reibung bzw. Verlustleistung im Lager.
7. Einfache Montage und Einstellbarkeit des axialen Rotor- und Lagerspiels.
8. Weitgehende Verwendung von Standard-Lagerkomponenten zur Kostenreduzierung.
9. Eignung für Temperaturen bis zu 120°C.

Die nachstehend aufgeführten Lagerungsvarianten der kombinierten Radial-Axial-Lagerung auf der Festlagerseite der einzelnen Rotoren von zweiwelligen Drehkolbenverdichtern sind bekannt und werden heute vielfach eingesetzt:
a) 1x NU (Zylinderrollenlager mit zwei Borden am Außenring) + 2x ESKL (einreihiges Schrägkugellager). Eine solche Lagerung ist beispielsweise in DE 4305289 C2 oder auch in DE 69324803 T2 offenbart.
b) 1x NU (Zylinderrollenlager) + 1x ESKL (einreihiges Schrägkugellager). Eine solche Lagerung ist beispielsweise in DD 246596 A1 oder in DD 301063 A7 oder auch in DE 4432518 A1 offenbart.
c) 1x NU (Zylinderrollenlager) + 1x QJ (Vierpunktlager). Eine solche Lagerung ist beispielsweise in Rinder, L.: Schraubenverdichter. Springer-Verlag 1977, Abb. 107 oder in US 4465446 A oder auch in US 2243874 A offenbart.
d) 1x Pendelrollenlager
e) 1x NU + 1x Kegelrollenlager
f) 2x Kegelrollenlager. Eine solche Lagerung ist beispielsweise in der SKF-USA Firmenschrift Nr. 100-956 "Bearings in twin screw compressors - Application Handbook" 1998, Seite 39, Fig. 25 offenbart.
g) 1x Zweireihiges Schrägkugellager. Eine Lagerung mit zwei einreihigen Schrägkugellagern ist beispielsweise in US 4227755 A und in US 3454313 A offenbart.

Allerdings ist keine der Lagerungsvarianten geeignet, alle oben aufgeführten Anforderungen (1 bis 9) gleichzeitig zu erfüllen.

Ferner offenbart die JP 11 107970 A einen öleingespritzten Drehkolbenverdichter ohne Steuerräder, bei dem neben Öl auch andere Schmiermittel zum Schmieren der miteinander kämmenden Drehkolben zum Einsatz kommen können.

### Darstellung der Erfindung

Es ist daher Aufgabe der vorliegenden Erfindung, eine trockenlaufende Drehkolbenmaschine der eingangs genannten Art bzw. eine Festlageranordnung hierfür bereitzustellen, welche die oben genannten Anforderungen erfüllt und dennoch eine einfache Konstruktion besitzt.

Diese Aufgabe wird erfindungsgemäß durch eine Drehkolbenmaschine nach Anspruch 1 gelöst. Besonders vorteilhafte Weiterbildungen der Erfindung sind in den abhängigen Ansprüchen angegeben.

Bei dem erfindungsgemäßen Drehkolbenverdichter weist somit die Festlageranordnung mindestens einer Welle ein einreihiges Schrägkugellager und ein Zylinderrollenlager auf, und das Zylinderrollenlager umfasst einen ersten Lagerring mit zwei Borden und einen zweiten Lagerring mit einem Bord. Mit dieser einfachen Konstruktion lassen sich die oben genannten Anforderungen gleichzeitig erfüllen. Insbesondere eignet sich die Lageranordnung auch zur Aufnahme negativer Axialkräfte, ohne dass hierdurch die Konstruktion kompliziert oder die Erfüllung der Anforderungen beeinträchtigt wird. Dabei hat es sich auch als besonders vorteilhaft erwiesen, dass die Festlageranordnung als separate Einheit vormontiert und ohne weitere Spieleinstellungen in einem einzigen Arbeitsgang in die entsprechende Drehkolbenmaschine eingebaut werden kann, wie untenstehend noch näher erläutert wird.

Weitere Ausführungsformen, Merkmale und Vorteile der vorliegenden Erfindung werden anhand der nachfolgenden ausführlichen Beschreibung noch näher ersichtlich werden.

### Kurze Beschreibung der Zeichnung

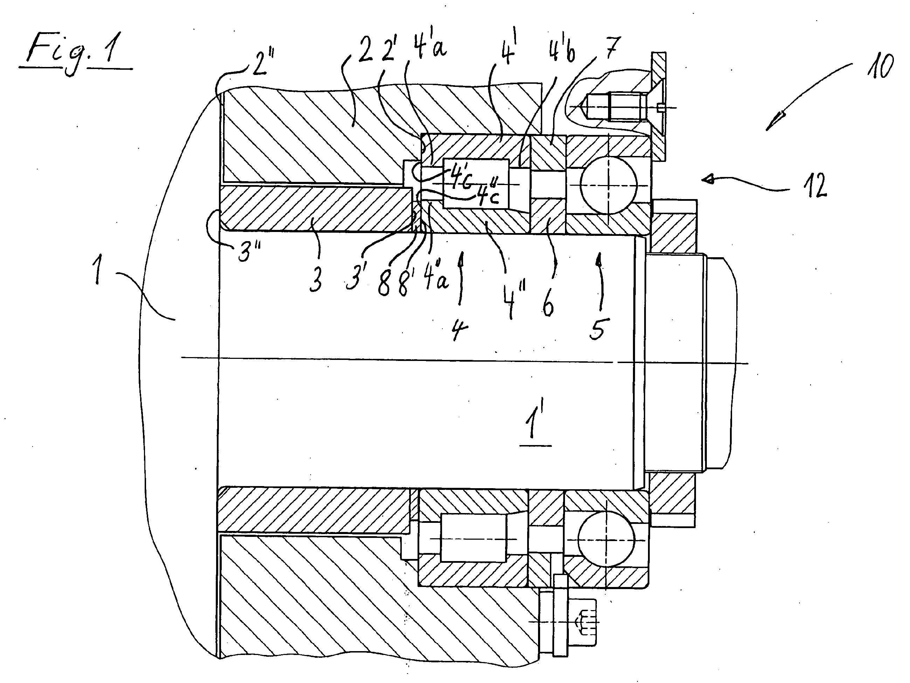

- Fig. 1: zeigt schematisch eine teilweise Schnittansicht einer Drehkolbenmaschine als Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitende Zeichnung beschrieben.

Eine Drehkolbenmaschine 10 als bevorzugte Ausführungsform der vorliegenden Erfindung ist in Fig. 1 schematisch in einer teilweisen Schnittansicht gezeigt. Obgleich in Fig. 1 nur teilweise gezeigt, umfasst die Drehkolbenmaschine 10 in der vorliegenden Ausführungsform zwei Drehkolben 1, die jeweils über eine Welle 1' und zugehörige Wälzlageranordnungen 12 in einem Gehäuse 2 gelagert sind und miteinander gegenläufig kämmen, um einen Förderraum zu definieren. Bei der vorliegenden Drehkolbenmaschine 10 handelt es sich um eine trockenlaufende Drehkolbenmaschine, bei der die Drehkolben 1 berührungsfrei miteinander kämmen, sodass hier keine Schmierung der Drehkolben selbst erforderlich ist. Die Wellen 1' weisen jeweils ein Steuerrad auf, wobei diese Steuerräder schrägverzahnt miteinander kämmen, obgleich dies in Fig. 1 nicht gezeigt ist.

In Fig. 1 ist eine von zwei Wälzlageranordnungen 12 einer Welle 1' gezeigt, und zwar diejenige, die in axialer Richtung als Festlageranordnung ausgebildet ist. Die Festlageranordnung 12 umfasst ein einreihiges Schrägkugellager 5 und ein Zylinderrollenlager 4, wobei das Zylinderrollenlager 4 einen ersten Lagerring 4' mit zwei Borden 4'a, 4'b und einen zweiten Lagerring 4" mit einem Bord 4''a aufweist. In der vorliegenden Ausführungsform ist der mit zwei Borden versehen Lagerring 4' als Außenring und der mit einem Bord versehene Lagerring 4" als Innenring angeordnet. Im Rahmen der vorliegenden Erfindung kann diese Anordnung jedoch auch umgekehrt vorgesehen werden.

In der vorliegenden Ausführungsform ist das Bord 4''a des zweiten Lagerringes (Innenrings) 4'' auf der den Drehkolben 1 zugewandten Seite angeordnet. Wäre andererseits der mit einem Bord ausgestattete Lagerring als Außenring ausgestaltet, müsste das Bord dieses Lagerrings auf der den Drehkolben abgewandten Seite angeordnet werden.

Bei der Ausbildung der Festlageranordnung 12 gemäß der vorliegenden Ausführungsform werden die aus der Gasverdichtung herrührenden hohen radialen Kräfte durch ein "NJ"-Zylinderrollenlager 4 mit zwei Borden 4'a, 4'b am Außenring 4' und einem Bord 4''a am Innenring 4'' aufgenommen. Die aus der Gasverdichtung herrührenden hohen axialen Kräfte in Positivrichtung (diese Kräfte verschieben Rotor 1 in Fig. 1 nach links, also von der Druckseite in Richtung Saugseite der Drehkolbenmaschine) werden durch das einreihige Schrägkugellager (ESKL) 5 aufgenommen. Die üblicherweise weitaus geringeren Axialkräfte in Negativrichtung werden von der Innenring-Schulter 4"a des NJ-Lagers 4 aufgenommen. Die Lagerung nimmt also radiale und positive axiale Kräfte in getrennten Standardlagern auf. Beide Lagerbauarten sind für die jeweilige Belastungsart spezialisiert. Das Radiallager NJ nimmt zusätzlich die Axialkräfte in Negativrichtung auf. Diese entstehen meist kurzzeitig in instationären Betriebsfällen, in denen die Gaskräfte (Positivrichtung) noch nicht vollständig aufgebaut sind und dadurch z.B. Verzahnungskräfte überwiegen können.

Zur präzisen Fixierung der Rotorposition innerhalb der begrenzenden Gehäusewandung 2 mit einem möglichst geringen Spiel muss zunächst das Lagerspiel möglichst gering sein. Das radiale Lagerspiel wird ausschließlich durch die Temperaturdifferenzen zwischen Lageraußen- und Innenring bestimmt und ist damit möglichst klein. Bedingt durch den leichten Lauf der Lagerung ist die Wälzkörpererwärmung gering, so dass Lager mit kleinem Lagerspiel eingesetzt werden können. Das axiale Lagerspiel wird durch zwei Distanzringe 6 und 7 eingestellt, die axial zwischen den Lageraußen- und Innenringen der beiden Lager 4, 5 montiert werden. Durch geeignete Wahl unterschiedlich dicker Distanzringe 6, 7 zwischen den Lagerinnen- und Lageraußenringen ist die Einstellung des axialen Lagerspiels möglich.

Eine vorteilhafte Weiterbildung der Erfindung besteht darin, den äußeren Distanzring 6 mit radial verlaufenden Schlitzen, Bohrungen oder Aussparungen (in Fig. 1 nicht gezeigt) zu versehen, so dass hierdurch der Zutritt oder auch Abfluss von Schmiermittel zwischen die beiden Lager 4, 5 erfolgen kann. Dies stellt auch einen weiteren Vorteil gegenüber zweireihigen, einteiligen Lagern dar, bei denen die Schmierölversorgung der zweiten Wälzkörperreihe zumeist durch die erste Reihe hindurch erfolgen muss. Bei Verwendung einer Druckölschmierung können auch Spritzdüsen in den Distanzringen 6, 7 vorgesehen werden.

Da die Dicke der Distanzringe 6, 7 recht gering gewählt werden kann und nur zwei Lager 4, 5 verwendet werden müssen, baut die aus NJ-Lager, Distanzringen und Schrägkugellager gebildete Lagereinheit 12 axial sehr kurz. Hierdurch können Rotorwellen 1' mit geringerer Länge eingesetzt werden, wodurch die Durchbiegung der Rotoren 1 ebenfalls geringer ist. Dies ermöglicht bei gleichen Betriebsdruckdifferenzen geringere radiale Spiele zwischen den Rotoren 1 und dem Gehäuse 2 und damit einen höheren Wirkungsgrad der Drehkolbenmaschine 10.

Bauartbedingt sind sowohl das NJ-Lager 4 als auch das einreihige Schrägkugellager 5 für hohe Drehzahlen geeignet.

Ein weiterer Vorteil der erfindungsgemäßen Festlagereinheit 12 besteht darin, dass im Vergleich zu Kegelrollen-, Pendelrollen- und QJ-Lagern die Radial-Axiallagerkombination NJ+ESKL einen sehr geringen Rollwiderstand und damit eine geringe Verlustleistung aufweist. Hierdurch werden geringere Schmiermitteltemperaturen erreicht und damit die Lebensdauern des Schmiermittels und der Lager erhöht.

Erfindungsgemäß wird die Kombination aus NJ-Lager 4, Distanzringen 6, 7 und Schrägkugellager 5 als eine einbaufertige Lagereinheit 12 mit definiertem axialem Lagerspiel der Lagereinheit bereitgestellt. Dazu ist ein der Rotormontage vorgelagerter Arbeitsgang erforderlich, bei dem beispielsweise durch Variation der Dicke eines der beiden Distanzringe 6, 7 das gewünschte geringe Axialspiel der Lagereinheit eingestellt wird. Die so einander zugeordneten vier Bestandteile 4, 5, 6, 7 der Lagereinheit werden geeignet markiert und nicht mehr getrennt.

Die Verwendung von Distanzringen ist nicht erforderlich, wenn zumindest eine der vier axialen, einander zugewandten Anlageflächen des Zylinderrollenlagers 4 und des Schrägkugellagers 5 derart bearbeitet (z. B. geschliffen) wird, dass sich das gewünschte Gesamtspiel der Lagereinheit ergibt.

In einem zweiten vorgelagerten Arbeitsgang wird bei dieser Ausführungsform der axiale Abstand der zum Rotorkörper 1 weisenden Anlagenflächen 4'c, 4"c von Lageraußenring 4' und Lagerinnenring 4'' des Zylinderrollenlagers 4 ermittelt. Hierzu wird der Außenring 4' festgesetzt und der Innenring 4" so axial belastet, dass die zylindrischen Wälzkörper am Bord 4''a des Innenringes 4'' anliegen. Durch Zugabe einer weiteren Distanzscheibe 8 kann der axiale Abstand der zum Rotorkörper 1 weisenden Anlagenfläche 4'c vom Lageraußenring 4' zur rotorseitigen Anlagefläche 8' der Distanzscheibe 8 auf ein vorbestimmtes Maß mit der Toleranz 0/+a gebracht werden. Wird dann im Gehäuse 2 der Abstand der Anlagefläche 2' für den äußeren Lagerring 4' des Zylinderrollenlagers 4 zur rotorseitigen Gehäusestirnfläche 2'' mit der Toleranz 0/-b gefertigt und außerdem bei der Herstellung der in Fig. 1 nicht näher ausgeführten Dichtungseinheit 3, welche axial an der Stirnseite des Rotors 1 anliegt, die vorgegebene axiale Länge der Dichtungseinheit 3 mit der Toleranz 0/+c eingehalten, so lässt sich auf diese Weise der stirnseitige Spalt des Rotors 1 zum Gehäuse 2 mit einer Toleranz von 0/+(a+b+c) einstellen.

Alternativ zur Distanzscheibe 8 am Innenring kann auch eine Distanzscheibe am Außenring verwendet werden. Eine weitere Möglichkeit besteht darin, ohne Verwendung einer Distanzscheibe die axiale Länge der Dichtungseinheit 3 z.B. durch Schleifen individuell so einzustellen, dass der axiale Abstand der rotorseitigen Anlagefläche 4'c des Lageraußenringes 4' des Zylinderrollenlagers 4 zur rotorseitigen Anlagefläche 3'' der Dichtungseinheit 3 ein vorbestimmtes Maß mit der Toleranz 0/+a einhält. Hierzu muss in allen oben beschriebenen Fällen ebenfalls der Außenring 4' des Zylinderrollenlagers 4 festgesetzt und der Innenring 4'' axial so belastet werden, dass die zylindrischen Wälzkörper am Bord 4"a des Innenringes 4" anliegen. Auf diese Weise lässt sich der stirnseitige Spalt des Rotors 1 zum Gehäuse 2 mit einer Toleranz von sogar nur 0/+(a+c) einstellen.

Eine weitere Alternative besteht darin, die Lage der Stirnflächen 4'c, 4''c der Ringe 4', 4'' des Zylinderrollenlagers auf ein vorbestimmtes Maß dadurch zu bringen, dass die lagerseitige Anlagefläche 2' des Gehäuses 2 entsprechend bearbeitet wird.

Es wird deutlich, dass mit der erfindungsgemäßen Festlagereinheit ein stirnseitiger Spalt zwischen Rotor 1 und Gehäuse 2 mit sehr hoher Genauigkeit einstellbar ist. Zudem finden alle Arbeiten, die das axiale Lagerspiel und den axialen Spalt festlegen vor der eigentlichen Rotormontage statt. Bei der Montage der voreingestellten Lagereinheit 12, bestehend aus NJ-Lager 4, Distanzringen 6, 7 und Schrägkugellager 5 sowie Distanzscheibe 8 ist der Rotor 1 automatisch axial eingestellt. Weitere Justierarbeitsgänge entfallen völlig.

Ein weiterer Vorteil der erfindungsgemäßen Festlagereinheit 12 besteht darin, dass beide Einzellager 4, 5 zum Standard-Lieferprogramm der Lagerhersteller gehören und in großen Stückzahlen hergestellt werden. Daraus ergeben sich hohe Qualitätssicherheit, hohe Verfügbarkeit und niedriges Kostenniveau. Zudem können von derartigen Lagern Lagertemperaturen bis 120°C problemlos ertragen werden. Beide Lagerkomponenten der erfindungsgemäßen Lagereinheit weisen schon in der Standardausführung eine Formstabilität bis 150°C auf.

## Patentansprüche

1. Trockenlaufende Drehkolbenmaschine (10), umfassend
mindestens zwei in einem Gehäuse (2) über Wellen (1') und Wälzlageranordnungen (12) gelagerte Drehkolben (1), die miteinander gegenläufig kämmen, um einen Förderraum zu definieren, wobei
die Wellen (1') über schrägverzahnte Steuerräder betrieblich miteinander gekoppelt sind,
eine der Wälzlageranordnungen (12) mindestens einer Welle (1') in axialer Richtung als Festlageranordnung ausgebildet ist,
die Festlageranordnung (12) ein einreihiges Schrägkugellager (5) und ein Zylinderrollenlager (4) aufweist,
**dadurch gekennzeichnet, dass**
das Zylinderrollenlager (4) einen ersten Lagerring (4') mit zwei Borden (4'a, 4'b) und einen zweiten Lagerring (4 ") mit einem Bord (4''a) aufweist.

2. Drehkolbenmaschine nach Anspruch 1, **dadurch gekennzeichnet, dass** der erste Lagerring (4') des Zylinderrollenlagers (4) als Außenring und der zweite Lagerring (4'') des Zylinderrollenlagers (4) als Innenring angeordnet ist, und dass das Bord (4''a) des zweiten Lagerrings (4") auf der den Drehkolben (1) zugewandten Seite angeordnet ist.

3. Drehkolbenmaschine nach Anspruch 1, **dadurch gekennzeichnet, dass** der erste Lagerring des Zylinderrollenlagers als Innenring und der zweite Lagerring des Zylinderrollenlagers als Außenring angeordnet ist, und dass das Bord des zweiten Lagerrings auf der den Drehkolben abgewandten Seite angeordnet ist.

4. Drehkolbenmaschine nach einem der vorhergehenden Ansprüche, **dadurch gekennzeichnet, dass** zwischen dem einreihigen Schrägkugellager (5) und dem Zylinderrollenlager (4) Distanzringe (6, 7) angeordnet sind, insbesondere ein Innen- und ein Außendistanzring.

5. Drehkolbenmaschine nach einem der vorhergehenden Ansprüche, **dadurch gekennzeichnet, dass** zwischen dem Innenring (4") des Zylinderrollenlagers (4) und dem zugehörigen Drehkolben (1) mindestens eine Distanzscheibe (8) angeordnet ist.

6. Drehkolbenmaschine nach einem der vorhergehenden Ansprüche, **dadurch gekennzeichnet, dass** zwischen dem Innenring (4'') des Zylinderrollenlagers (4) und dem zugehörigen Drehkolben (1) mindestens eine Dichtungseinheit (3) angeordnet ist, an der bevorzugt die mindestens eine Distanzscheibe (8) anliegt.

7. Drehkolbenmaschine nach einem der vorhergehenden Ansprüche, **dadurch gekennzeichnet, dass** die Festlageranordnung (12) auf der Druckseite der Drehkolbenmaschine vorgesehen ist.

8. Drehkolbenmaschine nach einem der vorhergehenden Ansprüche, **dadurch gekennzeichnet, dass**
das axiale Lagerspiel der gesamten Festlageranordnung, beispielsweise messbar als maximale axiale Relativverschiebung zwischen dem ersten Lagerring (4') des Zylinderrollenlagers (4) und dem zweiten Lagerring (4'') des Zylinderrollenlagers (4) in der Festlageranordnung, auf ein vorbestimmtes Maß eingestellt ist.

9. Drehkolbenmaschine nach Anspruch 8, **dadurch gekennzeichnet, dass** der maximale axiale Überstand zwischen der Anlagefläche (4"c) des Innenrings (4'') und der Anlagefläche (4'c) des Außenrings (4') auf den axialen Abstand zwischen einer sich mittelbar oder unmittelbar am Drehkolben (1) der Drehkolbenmaschine abstützende Anlagefläche (3'; 8') für den Innenring (4") und einer an dem Gehäuse vorgesehenen Anlagefläche (2') für den Außenring (4') abgestimmt ist.

10. Drehkolbenmaschine nach Anspruch 9, **dadurch gekennzeichnet, dass** die sich mittelbar oder unmittelbar am Drehkolben (1) der Drehkolbenmaschine abstützende Anlagefläche (3'; 8') durch einen Distanzring (8) und/oder durch eine Dichtungseinheit (3) und/oder durch eine Wellenschulter gebildet ist.

11. Drehkolbenmaschine nach einem der Ansprüche 8 bis 10, **dadurch gekennzeichnet, dass** das vorbestimmte Maß des axialen Lagerspiels durch Vorsehen und ggf. Bearbeiten mindestens eines Distanzringes (6, 7) zwischen dem einreihigen Schrägkugellager (5) und dem Zylinderrollenlager (4) eingestellt ist.

12. Drehkolbenmaschine nach einem der Ansprüche 8 bis 11, **dadurch gekennzeichnet, dass** das vorbestimmte Maß des axialen Lagerspiels durch Bearbeiten zumindest eine Anlagefläche zwischen dem einreihigen Schrägkugellager (5) und dem Zylinderrollenlager (4) eingestellt ist.

## Claims

1. Dry-operating rotary piston machine (10) comprising at least two rotary pistons (1) mounted in a housing (2) via shafts (1') and roller bearing arrangements (12) and which mesh with one another in opposite directions to define a conveying chamber, wherein the shafts (1') are coupled to one another in operation via helical control wheels, one of the roller bearing arrangements (12) of at least one shaft (1') is formed in axial direction as a fixed bearing arrangement, the fixed bearing arrangement (12) has a single-row angular ball bearing (5) and a cylindrical roller bearing (4), **characterised in that** the cylindrical roller bearing (4) has a first bearing ring (4') with two rims (4'a, 4'b) and a second bearing ring (4") with one rim (4"a).

2. Rotary piston machine according to claim 1, **characterised in that** the first bearing ring (4') of the cylindrical roller bearing (4) is arranged as an outer ring and the second bearing ring (4") of the cylindrical roller bearing (4) is arranged as an inner ring, and **in that** the rim (4"a) of the second bearing ring (4") is arranged on the side facing the rotary pistons (1).

3. Rotary piston machine according to claim 1, **characterised in that** the first bearing ring of the cylindrical roller bearing is arranged as an inner ring and the second bearing ring of the cylindrical roller bearing is arranged as an outer ring, and **in that** the rim of the second bearing ring is arranged on the side facing away from the rotary pistons.

4. Rotary piston machine according to one of the preceding claims, **characterised in that** spacer rings (6, 7), in particular an inner and an outer spacer ring, are arranged between the single-row angular ball bearing (5) and the cylindrical roller bearing (4).

5. Rotary piston machine according to one of the preceding claims, **characterised in that** at least one spacer disc (8) is arranged between the inner ring (4") of the cylindrical roller bearing (4) and the associated rotary piston (1).

6. Rotary piston machine according to one of the preceding claims, **characterised in that** at least one sealing unit (3), on which preferably the at least one spacer disc (8) rests, is arranged between the inner ring (4") of the cylindrical roller bearing (4) and the associated rotary piston (1).

7. Rotary piston machine according to one of the preceding claims, **characterised in that** the fixed bearing arrangement (12) is provided on the pressure side of the rotary piston machine.

8. Rotary piston machine according to one of the preceding claims, **characterised in that** the axial bearing clearance of the entire fixed bearing arrangement is adjusted to a predetermined extent, for example measurably as maximum axial relative displacement between the first bearing ring (4') of the cylindrical roller bearing (4) and the second bearing ring (4") of the cylindrical roller bearing (4) in the fixed bearing arrangement.

9. Rotary piston machine according to claim 8, **characterised in that** the maximum axial projection between the support surface (4"c) of the inner ring (4") and the support surface (4'c) of the outer ring (4') is matched to the axial distance between a support surface (3'; 8') for the inner ring (4") being supported indirectly or directly on the rotary piston (1) of the rotary piston machine and a support surface (2') for the outer ring (4') provided on the housing.

10. Rotary piston machine according to claim 9, **characterised in that** the support surface (3'; 8') being supported indirectly or directly on the rotary piston (1) of the rotary piston machine is formed by a spacer ring (8) and/or by a sealing unit (3) and/or by a shaft shoulder.

11. Rotary piston machine according to one of claims 8 to 10, **characterised in that** the predetermined extent of the axial bearing clearance is adjusted by providing and optionally machining at least one spacer ring (6, 7) between the single-row angular ball bearing (5) and the cylindrical roller bearing (4).

12. Rotary piston machine according to one of claims 8 to 11, **characterised in that** the predetermined extent of the axial bearing clearance is adjusted by machining at least one support surface between the single-row angular ball bearing (5) and the cylindrical roller bearing (4).

## Revendications

1. Machine à piston rotatif (10) fonctionnant à sec, comprenant :
au moins deux pistons rotatifs (1), montés en palier dans un carter (2), sur des arbres (1') et des agencements à paliers à roulement (12), les pistons rotatifs s'engrenant ensemble cinématiquement en sens inverse, pour définir une enceinte de transfert, où
les arbres (1') sont couplés ensemble fonctionnellement par l'intermédiaire de roues de commande à denture oblique,
l'un des agencements à paliers à roulement (12) d'au moins un arbre (1') est réalisé, en direction axiale, sous forme d'agencement à palier fixe,
l'agencement à palier fixe (12) présente un roulement à billes à contact oblique (5) à une rangée de billes et un palier à rouleaux cylindriques (4),
**caractérisée en ce que**
le palier à rouleaux cylindriques (4) présente une première bague de palier (4'), avec deux bords (4'a 4'b), et une deuxième bague de palier (4"), avec un bord (4"a).

2. Machine à piston rotatif selon la revendication 1, **caractérisée en ce que** la première bague de palier (4') du palier à rouleaux cylindriques (4) est disposée sous forme de bague extérieure, et la deuxième bague de palier (4") du palier à rouleaux cylindriques (4) est disposée sous forme de bague intérieure, et **en ce que** le bord (4"a) de la deuxième bague de palier (4") est disposé sur le côté tourné vers le piston rotatif (1).

3. Machine à piston rotatif selon la revendication 1, **caractérisée en ce que** la première bague de palier du palier à rouleaux cylindriques est disposée sous forme de bague intérieure, et la deuxième bague de palier du palier à rouleaux cylindriques est disposée sous forme de bague extérieure, et **en ce que** le bord de la deuxième bague de palier est disposé sur le côté opposé au piston rotatif.

4. Machine à piston rotatif selon l'une des revendications précédentes, **caractérisée en ce que** des bagues d'espacement (6, 7), en particulier une bague d'espacement intérieure et une autre extérieure, sont disposées entre le roulement à billes à contact oblique (5) à une rangée de billes et le palier à rouleaux cylindriques (4).

5. Machine à piston rotatif selon l'une des revendications précédentes, **caractérisée en ce qu'**au moins un disque d'espacement (8) est disposé entre la bague intérieure (4") du palier à rouleaux cylindriques (4) et le piston rotatif (1) afférent.

6. Machine à piston rotatif selon l'une des revendications précédentes, **caractérisée en ce que** qu'au moins une unité d'étanchéité (3), sur laquelle appuie de préférence un disque d'espacement (8), est disposée entre la bague intérieure (4") du palier à rouleaux cylindriques (4) et le piston rotatif (1) afférent.

7. Machine à piston rotatif selon l'une des revendications précédentes, **caractérisée en ce que** l'agencement à palier fixe (12) est prévu du côté refoulement de la machine à piston rotatif.

8. Machine à piston rotatif selon l'une des revendications précédentes, **caractérisée en ce que**
le jeu de palier axial de l'ensemble de l'agencement à palier fixe est réglé à une valeur prédéterminée, par exemple de manière mesurable sous forme de déplacement relatif axial maximal entre la première bague de palier (4') du palier à rouleaux cylindriques (4) et la deuxième bague de palier (4") du palier à rouleaux cylindriques (4) dans l'agencent à palier fixe.

9. Machine à piston rotatif selon la revendication 8, **caractérisée en ce que** le déplacement axial maximal, entre la face d'appui (4"c) de la bague intérieure (4") et la face d'appui (4'c) de la bague extérieure (4'), est adapté à l'espacement axial, entre une face d'appui (3' ; 8') pour la bague intérieure (4"), prenant appui, indirectement ou directement, sur le piston rotatif (1) de la machine à piston rotatif, et une face d'appui (2'), prévue sur le carter, pour la bague extérieure (4').

10. Machine à piston rotatif selon la revendication 9, **caractérisée en ce que** la face d'appui (3' ; 8'), prenant appui, indirectement ou directement, sur le piston rotatif (1) de la machine à piston rotatif, est formée par une bague d'espacement (8) et/ou par une unité d'étanchéité (3) et/ou par un épaulement d'arbre.

11. Machine à piston rotatif selon l'une des revendications 8 à 10, **caractérisée en ce que** la valeur prédéterminée du jeu de palier axial est réglée par le fait de prévoir et, le cas échéant, d'usiner au moins une bague d'espacement (6, 7) entre le roulement à billes à contact oblique (5) à une rangée de billes et le palier à rouleaux cylindriques (4).

12. Machine à piston rotatif selon l'une des revendications 8 à 11, **caractérisée en ce que** la valeur prédéterminée du jeu de palier axial est réglée par le fait d'usiner au moins une face d'appui entre le roulement à billes à contact oblique (5) à une rangée de billes et le palier à rouleaux cylindriques (4).
